# EUROPÄISCHE PATENTSCHRIFT

(11) **EP 1 358 999 B1**
(45) Veröffentlichungstag und Bekanntmachung des Hinweises auf die Patenterteilung: **16.07.2008**
(21) Anmeldenummer: 03005288.0
(22) Anmeldetag: 11.03.2003
(51) Int. Cl.: B29D 30/42, B29C 65/00, B29K 21/00, B29L 30/00

(54) **Spleissvorrichtung**
Splicing device
Dispositif de raccordement

(30) Priorität: 03.05.2002 DE 10219928
(43) Veröffentlichungstag der Anmeldung: 05.11.2003
(73) Patentinhaber: Karl Eugen Fischer GmbH Maschinenfabrik, D-96224 Burgkunstadt (DE)
(72) Erfinder: Lauer, Stefan, 96247 Michelau-Schwürbitz (DE)
(74) Vertreter: Blaumeier, Jörg

(56) Entgegenhaltungen:
- GB-A- 1 114 024
- GB-A- 1 376 400
- US-A- 3 100 731
- US-A- 4 054 475
- US-A- 4 173 509

## Beschreibung

Die Erfindung bezieht sich auf eine Spleißvorrichtung zum stumpfen Verspleißen zweier Bandabschnitte, insbesondere un- oder vorvulkanisierter Cordbandabschnitte zur Reifenherstellung, mit zwei gegeneinander verschiebbaren Spleißleistenpaaren, deren übereinander liegende Einzelspleißleisten zwischen einer oberen Freigabestellung und einer unteren Einklemmstellung für die Ränder der Bandabschnitte verfahrbar sind, wobei die Spleißleisten Zahnleisten sind, wobei die Zähne der beiden oberen Zahnleisten und die Zähne der beiden unteren Zahnleisten gegeneinander gestellt und auf Lücke versetzt angeordnet sind.

Bei derartigen Spleißvorrichtungen besteht das Problem, dass beim Zusammendrücken der Kanten der Bandabschnitte das Material nach oben ausweicht und dabei eine Wulst bildet. Eine derartige Wulst vermeiden zwar Spleißvorrichtungen, bei denen das Anspleißen mithilfe von ineinander verzahnten Kegelrädern erfolgt, die quer zur Nahtstelle, an der die beiden Streifen aneinander stoßen und unter Druck gerollt werden und dabei das Material fest aneinander drücken. Insbesondere bei großen Breiten der verspleißenden Bandabschnitte bedarf es aber aus wirtschaftlichen Gründen einer hohen Verfahrgeschwindigkeit der verzahnten Kegelräder, was wiederum die Qualität des Spleißvorgangs negativ beeinträchtigt.

Aus der US 4,173,509 ist auch bereits eine Spleißvorrichtung der eingangs genannten Art bekannt geworden, bei der die oberen Spleißleisten auf der Unterseite, also dort, wo sie auf den Bandabschnitten aufsetzen, mit einer Zähnung versehen sind. Dies verhindert beim Zusammendrücken zum Spleißen lediglich ein Abrutschen, hat aber im Hinblick auf die Qualität der Spleißnaht und die Verhinderung einer Wulst überhaupt keine Bedeutung. Im Gegenteil wird durch die Zähnung die Oberfläche eingedrückt, sodass gar keine durchgehend glatte Oberfläche des verspleißten Bandes mehr gegeben ist.

Eine Spleißvorrichtung der eingangs genannten Art ist aus US-A-3,100,731 bekannt. Dort liegen die Zähne der jeweils übereinander liegenden Zahnleistenpaare deckungsgleich übereinander, so dass zwischen sie die Zähne kammartiger Anschlagleisten, gegen die die Bandkante zur Positionierung stößt, eingeschwenkt werden können.

Der Erfindung liegt daher die Aufgabe zugrunde, eine Spleißvorrichtung der eingangs genannten Art so auszugestalten, dass ähnlich wie bei Kegelrad-Spleißvorrichtungen ein Ausweichen des Bandmaterials nach oben und die Bildung von störenden Wülsten ausgeschlossen ist.

Zur Lösung dieser Aufgabe ist erfindungsgemäß vorgesehen, dass auch die Zähne der übereinander liegenden Zahnleisten auf Lücke versetzt angeordnet sind.

Im Gegensatz zu der eingangs angesprochenen US 4,173,509 sind bei der erfindungsgemäßen Konstruktion alle vier Spleißleisten als Zahnleisten ausgebildet, wobei entscheidend ist, dass nicht die im Kontakt mit den Bandabschnitten tretenden Seiten gezähnt sind, sondern die um 90° dagegen versetzten, sodass also die Zähne der beiden oberen Zahnleisten gegeneinander gekehrt sind und die Zähne der beiden unteren Zahnleisten gegeneinander gekehrt sind. In Verbindung mit der Versetzung auf Lücke können beim Spleißvorgang die Zähne ineinander fahren, sodass sie das Auswölben von Bandmaterial an der dadurch überdeckten Spleißkante sicher verhindern.

Ganz besonders gute Arbeitsergebnisse erreicht man dadurch, dass die Zähne der übereinanderliegenden Zahnstangen auf Lücke versetzt angeordnet sind. In diesem Fall hat es nicht wie bei den gegeneinander gestellten oberen bzw. unteren Zahnleisten den Zweck des Ineinanderfahren, sondern hier dient das Auf-Lücke-Versetzen noch zusätzlich der Verhinderung einer Ausweichbewegung des Bandmaterials nach oben oder unten.

In Ausgestaltung der Erfindung kann dabei vorgesehen sein, dass die Zähne komplementär zu den Lücken trapezförmig ausgebildet sind, wobei in der Praxis die Zähne beim Spleißvorgang nie vollständig ineinander fahren, da das Ineinanderfahren durch das Verfestigen des Materials beim Spleißvorgang gestoppt wird.

Die unteren Spleißleisten, von denen nur eine horizontal gegen die andere verschiebbar gelagert sein soll, sind vertikal unverschiebbar unmittelbar unter der Transportebene der zu verspleißenden Bandabschnitte angeordnet und zwar bevorzugt an einem festen Tisch, während die oberen an einer absenkbaren Tragplatte gegeneinander verstellbar gelagert sind.

Schließlich liegt es auch noch im Rahmen der Erfindung, dass die horizontale Bewegung der Spleißleisten gegeneinander durch einstufige, gegen die Wirkung von Abstützfedern zwischen den Spleißleisten arbeitende Hydraulik- oder Pneumatikzylinder erfolgt.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

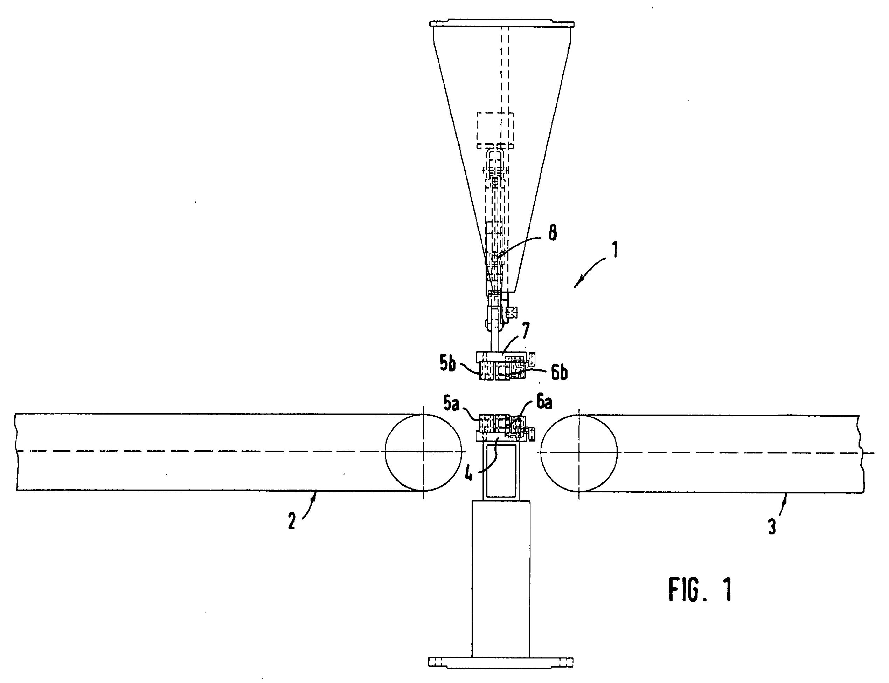

- Fig. 1: eine Übersichtsskizze einer erfindungsgemäßen Spleißvorrichtung,
- Fig. 2: eine vergrößerte Stirnansicht der Spleißleisten in der auseinander gefahrenen Ausgangsstellung,
- Fig. 3: eine Draufsicht auf die unteren oder oberen Zahnleisten in der Ausgangsstellung nach Fig. 2,
- Fig. 4: eine der Fig. 2 entsprechende Stirnansicht nach dem Herunterfahren der oberen Spleißleisten zum Einklemmen der Bandabschnitte,
- Fig. 5: eine der Fig. 4 entsprechende Ansicht nach dem horizontalen Zusammenfahren der Spleißleisten zum Verbinden der Bandabschnitte,
- Fig. 6: eine Draufsicht auf die Zahnstangen in der Betriebsstellung nach Fig. 5 nach dem Verspleißen und
- Fig. 7: eine Draufsicht auf die Spleißleisten, wobei sowohl die oberen als auch die unteren Spleißleisten in ihrer Versetzung auf Lücke dargestellt sind.

Die gezeigte Spleißvorrichtung 1, die zwischen einem Materialzuführungsband 2 und einem Materialabtransportband 3 angeordnet ist, besteht aus zwei starr an einem unteren Arbeitstisch 4 gelagerten unteren Spleißleisten 5a und 6a und zwei gemeinsam an einer Platte 7 gelagerten, über einen Pneumatikzylinder 8 heb- und senkbaren oberen Spleißleisten 5b und 6b. Die Spleißleisten 5a und 5b sind jeweils starr am Tisch 4 bzw. der Tragplatte 7 befestigt, während die Spleißleisten 6a und 6b horizontal gegen die feststehenden Spleißleisten 5a bzw. 5b verfahrbar sind. Das Verfahren erfolgt mithilfe eines einstufigen Hydraulikkolbens 9 und 10, der über einen Anschluss-Stutzen 11 und 12 mit Druckluft versorgt wird. Die Kolben 9 und 10 arbeiten gegen nicht gezeigte Federn zwischen den Spleißleisten 5a und 6a einerseits und 5b und 6b andererseits.

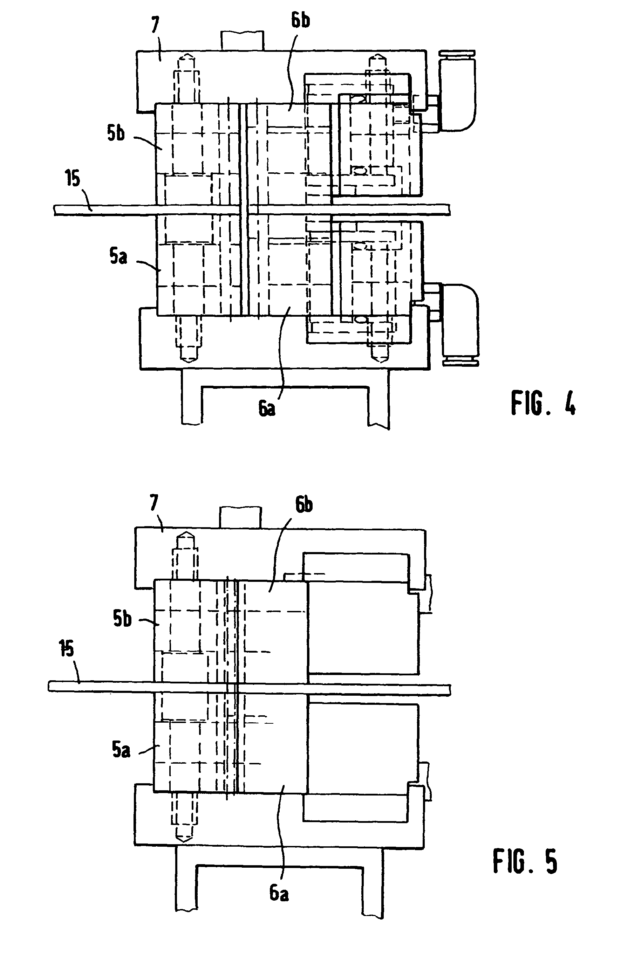

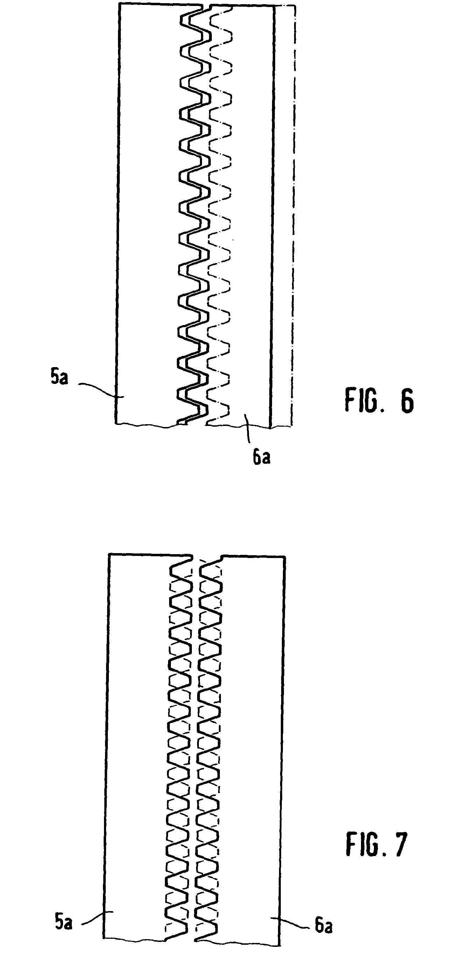

Die wesentliche Besonderheit der erfindungsgemäßen Spleißvorrichtung besteht darin, dass die vier Spleißleisten 5a, 5b, 6a und 6b als Zahnstangen ausgebildet sind, wobei die Zähne 13 und 14 Zahnleisten im dargestellten Ausführungsbeispiel trapezförmig ausgebildet sind und zwar komplementär zur Form der Zahnlücke 14. Die Zahnstangen 5a, 6a einerseits, 6b und 5b andererseits sind dabei in Längsrichtung so versetzt , dass ihre Zähne, wie man insbesondere den Fig. 4 und 6 entnehmen kann, auf Lücke versetzt angeordnet sind.

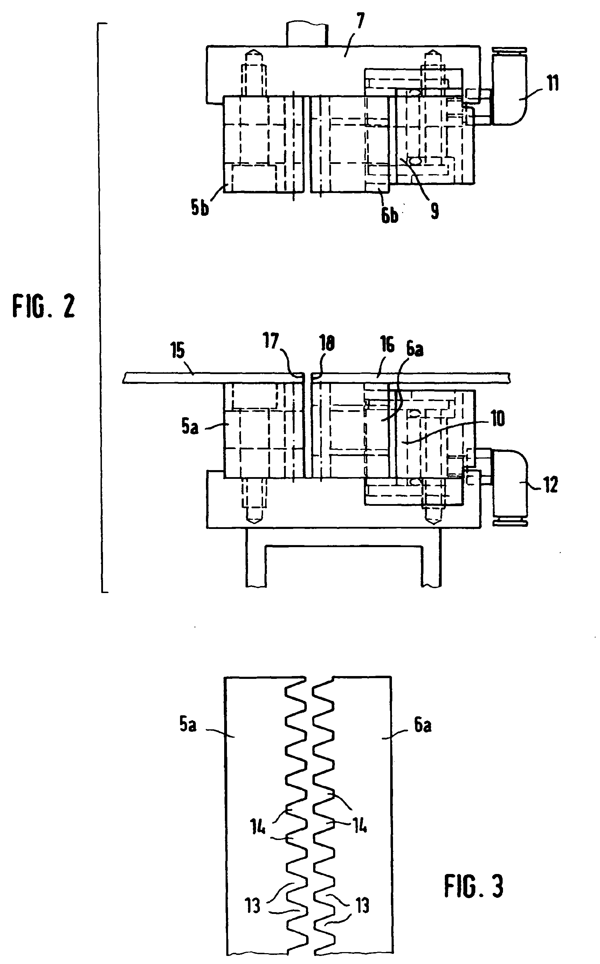

In Fig. 2 erkennt man den einlaufenden Bandabschnitt 15, der mit dem auslaufenden Bandabschnitt 16 verspleißt werden soll. Zunächst fährt die Platte 7 mit den oberen Spleißleisten 5b und 6b nach unten und klemmt die beiden Bandabschnitte 15 und 16 unmittelbar bis zur jeweiligen Bandabschnittskante 17 bzw. 18 ein. Anschließend werden die rechts liegenden Spleißleisten 6a und 6b mithilfe der Kolben 9 und 10 horizontal verfahren, wodurch die Kanten 17 und 18 aneinander gedrückt werden. Infolge des Ineinandergreifens der Zähne 13 wird dabei verhindert, dass Bandmaterial sich aufwölbt und an der Spleißnaht eine Wulst bilden kann. In Fig. 6 erkennt man das sehr gut durch die ineinander greifenden Zähnungen der Spleißleisten 5a und 6a. In gleicher Weise greifen natürlich auch die Spleißleisten 5b und 6b ineinander und verhindern dadurch das Nach-oben- bzw. Nach-unten-Ausweichen des Bandmaterials. In Fig. 7 erkennt man, dass zusätzlich zu der Versetzung der Zähne der Spleißleisten 5a und 6a einerseits und den Spleißleisten 5b und 6b andererseits auf Lücke auch die übereinander liegenden Spleißleisten jedes Spleißpaars, also die Spleißleisten 5a, 5b und die Spleißleisten 6a und 6b jeweils auf Lücke versetzt angeordnet sind. Dies ergibt eine optimale Absicherung gegen das Ausweichen des Bandmaterials beim Spleißen. Wie man insbesondere aus Fig. 6 erkennen kann, die die Endstellung nach dem Splei-βen darstellt, werden die Spleißleisten nicht so weit zusammengefahren, dass die Zähne jeweils am Grund der gegenüberliegenden Zahnlücken anstoßen. Dieses vollständige Zusammenfahren wird durch das Verfestigen des Materials der Bandabschnitte beim Spleißen verhindert. Die Kraft wird schließlich so groß, dass die Kolben 9 und 10 ein weiteres Zusammendrücken gar nicht bewirken können.

## Patentansprüche

1. Spleißvorrichtung zum stumpfen Verspleißen zweier Bandabschnitte, insbesondere un- oder vorvulkanisierter Cordbandabschnitte zur Reifenherstellung, mit zwei gegeneinander verschiebbaren Spleißleistenpaaren, deren übereinander liegende Einzeispleißleisten (5a, 5b, 6a, 6b) zwischen einer oberen Freigabestellung und einer unteren Einklemmstellung für die Ränder der Bandabschnitte verfahrbar sind, wobei die Spleißleisten (5a, 5b, 6a, 6b) Zahnleisten sind, wobei die Zähne (13) der beiden oberen Zahnleisten (5b, 6b) und die Zähne (13) der beiden unteren Zahnleisten (5a, 6a) gegeneinander gestellt und auf Lücke versetzt angeordnet sind, **dadurch gekennzeichnet, dass** auch die Zähne (13) der übereinander liegenden Zahnleisten (5a, 5b; 6a, 6b) auf Lücke versetzt angeordnet sind.

2. Spleißvorrichtung nach Anspruch 1, **dadurch gekennzeichnet, dass** die Zähne (13) komplementär zu den Lücken (14) trapezförmig ausgebildet sind.

3. Spleißvorrichtung nach Anspruch 1 oder 2, **dadurch gekennzeichnet, dass** die unteren Spleißleisten (5a, 6a) von denen nur eine (6a) horizontal gegen die andere verschiebbar gelagert ist, vertikal unverschiebbar unter der Transportebene der zu verspleißenden Bandabschnitte (15, 16) angeordnet sind.

4. Spleißvorrichtung nach einem der Ansprüche 1 bis 3, **dadurch gekennzeichnet, dass** die horizontale Bewegung der Spleißleisten (6a, 6b) durch einstufige, gegen die Wirkung von Abstützfedern zwischen den Spleißleisten (5a, 6a; 5b, 6b) arbeitende, Hydraulik- oder Pneumatikzylinder (9, 10) erfolgt.

5. Spleißvorrichtung nach einem der Ansprüche 1 bis 4, **dadurch gekennzeichnet, dass** die unteren Spleißleisten (5a, 6a) an einem festen Tisch (4) und die oberen an einer absenkbaren Tragplatte (7) (gegeneinander verstellbar) gelagert sind.

## Claims

1. Splicing device for the flush splicing of two strip lengths, in particular unvulcanised or pre-vulcanised corded strip lengths for the manufacture of tyres, having two pairs of splicing ledges displaceable relative to one another, their individual splicing ledges (5a, 5b, 6a, 6b), which lie one over another, being movable between an upper release position and a lower clamping position for the edges of the strip lengths, the splicing ledges (5a, 5b, 6a, 6b) being toothed ledges, the teeth (13) of the two upper toothed ledges (5b, 6b) and the teeth (13) of the two lower toothed ledges (5a, 6a) being disposed opposite one another and staggered, **characterised in that** the teeth (13) of the toothed ledges (5a, 5b; 6a, 6b) are also staggered.

2. Splicing device according to claim 1, **characterised in that** the teeth (13) are formed trapezoid in a complementary manner to the gaps (14).

3. Splicing device according to claim 1 or 2, **characterised in that** the lower splicing ledges (5a, 6a), of which only one (6a) is mounted displaceably relative to the other, are disposed vertically non-displaceably below the conveying plane of the band lengths (15, 16) to be spliced.

4. Splicing device according to one of claims 1 to 3, **characterised in that** the horizontal movement of the splicing ledges (6a, 6b) is effected by single-stage hydraulic or pneumatic cylinders (9, 10) operating against the effect of support springs between the splicing ledges (5a, 6a; 5b, 6b).

5. Splicing device according to one of claims 1 to 4, **characterised in that** the lower splicing ledges (5a, 6a) are mounted on a fixed table (4) and the upper splicing ledges on a supporting plate (7) capable of being lowered (are displaceable relative to one another).

## Revendications

1. Dispositif d'épissurage pour un raccordement bord à bord de deux tronçons de bande, en particulier des tronçons d'un câble non vulcanisés ou prévulcanisés pour la fabrication de pneus, comportant deux paires de barres d'épissurage, qui peuvent être déplacées l'une vers l'autre et dont les barres (5a, 5b, 6a, 6b) individuelles superposées peuvent être déplacées entre une position de déblocage supérieure et une position de blocage inférieure des bords des tronçons de bande, les barres d'épissurage (5a, 5b, 6a, 6b) étant des barres dentées, les dents (13) des deux barres dentées supérieures (5b, 6b) et les dents (13) des deux barres dentées inférieures (5a, 6a) étant disposées en étant décalées l'une par rapport à l'autre et en quinconce, **caractérisé en ce que** les dents (13) des barres dentées (5a, 5b ; 6a, 6b) superposées sont également disposées en quinconce.

2. Dispositif d'épissurage selon la revendication 1, **caractérisé en ce que** les dents (13) sont réalisées avec une forme trapézoïdale complémentaire à celle des entredents (14).

3. Dispositif d'épissurage selon la revendication 1 ou 2, **caractérisé en ce que** les barres d'épissurage inférieures (5a, 6a), dont une (6a) seule est montée de manière à pouvoir se déplacer horizontalement contre l'autre, sont disposées de manière immobile dans le sens vertical en dessous du plan de défilement des tronçons de bande (15, 16) à épisser.

4. Dispositif d'épissurage selon l'une quelconque des revendications 1 à 3, **caractérisé en ce que** le mouvement horizontal des barres d'épissurage (6a, 6b) est assuré par des vérins (9, 10) hydrauliques ou pneumatiques à un étage, travaillant à l'encontre de l'action de ressorts de support entre les barres d'épissurage (5a, 6a ; 5b, 6b).

5. Dispositif d'épissurage selon l'une quelconque des revendications 1 à 4, **caractérisé en ce que** les barres d'épissurage inférieures (5a, 6a) sont montées (en pouvant être décalées l'une par rapport à l'autre) sur un bâti (4) fixe et les barres supérieures sur un plateau de support (7) abaissable.
